Europäisches Patentamt

European Patent Office

Office européen des brevets

(19)

(11) Publication number: **0 027 823**
**A1**

## EUROPEAN PATENT APPLICATION

published in accordance with Art. 158(3) EPC

(21) Application number: 79900495.7

(22) Date of filing: 16.04.79

Data of the international application taken as a basis:

(86) International application number:
PCT/JP 79/00096

(87) International publication number:
WO 80/02263 (30.10.80 80/25)

(51) Int. Cl.³: **B 60 K 25/00**

(43) Date of publication of application: 06.05.81
Bulletin 81/18

(84) Designated Contracting States: **DE FR GB**

(71) Applicant: **HACHIYA, Takeo, 1956, Ooaza-Nakano, Oora-Machi, Oora-gun, Gunma 370-06 (JP)**

(72) Inventor: **HACHIYA, Takeo, 1956, Ooaza-Nakano, Oora-Machi, Oora-gun, Gunma 370-06 (JP)**

(74) Representative: **VOSSIUS VOSSIUS TAUCHNER HEUNEMANN RAUH, Siebertstrasse 4 P.O. Box 86 07 67, D-8000 München 86 (DE)**

(54) **TRANSMISSION MEANS FOR HYBRID TYPE FLYWHEEL VEHICLES.**

(57) A flywheel incorporated in a vehicle having an internal combustion engine is driven simultaneously with the start of the internal combustion engine and, upon a vehicle being accelerated up to a predetermined speed, the internal combustion engine is put in idling so that the vehicle is driven by the action of the flywheel. The idling of the internal combustion engine and the action of the flywheel are controlled by first and second timer mechanisms.

SPECIFICATION

POWER TRANSMISSION DEVICE FOR A HYBRID TYPE FLY-WHEEL VEHICLE

## Technical Field

This invention relates to a power transmission device for a hybrid type fly-wheel, in which a fly-wheel is incorporated in a vehicle with an internal combustion engine mounted on it.

## Background Art

The present applicant previously proposed (in Patent No. 920516) a speed limiting device for a vehicle provided with a timer mechanism which operates when the vehicle has reached its limit speed to render an accelerator inoperable and a clutch to release for a time period as set by the timer mechanism, thereby causing the vehicle to coast.

The present invention is directed to further develop the abovementioned device, in which the abovementioned coasting is replaced by fly-wheel running to attain energy saving.

## Disclosure of Invention

That is to say, the present invention provides a power transmission device for a hybrid type fly-wheel vehicle, in an internal-combustion-engine-driven-vehicle provided with a first timer mechanism which operates when the vehicle has reached its limit speed, and an electromagnetic mechanism installed in the transmission system of an accelerator pedal and a clutch pedal to close a throttle valve irrespective of operation of the accelerator pedal and to release the clutch irrespective of operation of the clutch pedal, for a time period established by the first timer mechanism, and to reinstate the throttle valve and the clutch upon lapse of the abovementioned established time, wherein there are provided a fly-wheel which receives driving force of a propeller shaft through the clutch and gears, and a second timer mechanism which becomes operative before the vehicle reaches its limit

speed, connects the abovementioned clutch for the fly-wheel to transmit the driving force of the propeller shaft to the fly-wheel, and, after the vehicle has reached its limit speed and the vehicle performs its fly-wheel running for a predetermined time, releases the clutch for the abovementioned fly-wheel.

As mentioned in the foregoing, since the present invention is of such a construction that, when the vehicle has reached its limit speed, the engine is brought to its idling condition, and the vehicle is changed over to its fly-wheel running for a certain definite period of time, fuel consumption can be remarkably reduced to sufficiently attain the purpose of energy saving. Further, even during the coasting, i.e., the fly-wheel running, of the vehicle, since cooling and warming of the vehicle interior is possible, there is no inconvenience to take place at all. Furthermore, there is another effect of reducing average noise of the engine.

Brief Explanation of Drawing

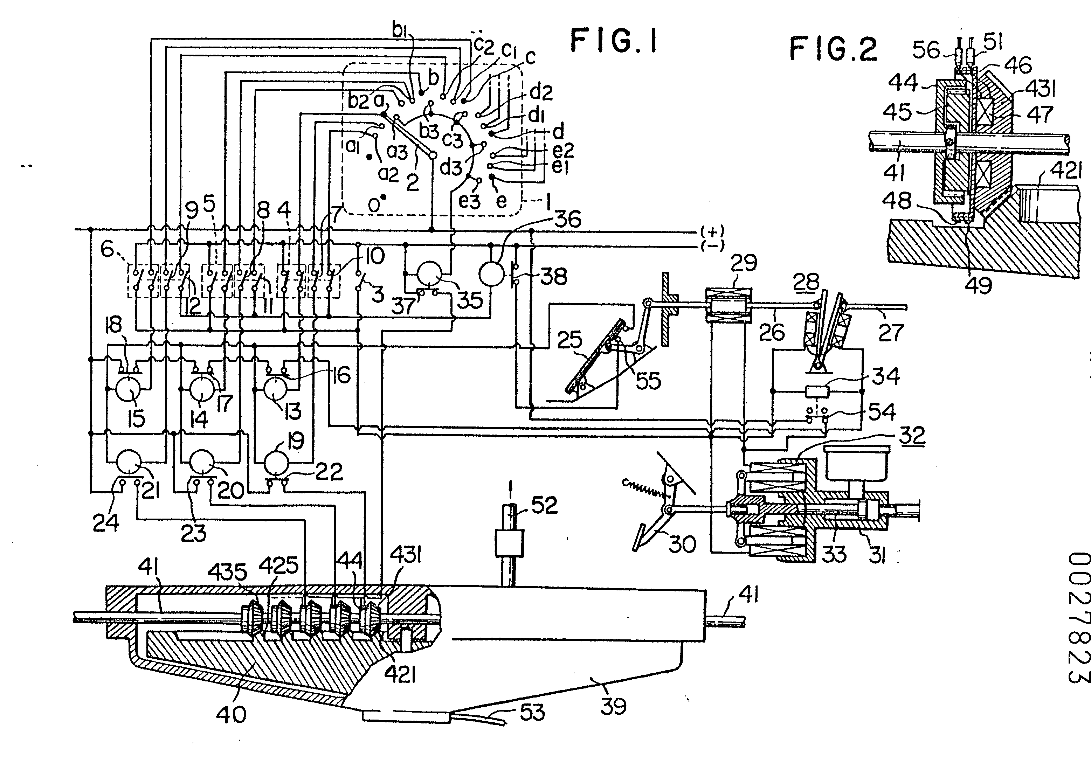

Figure 1 is an explanatory diagram for the operation of one embodiment, and Figure 2 is an enlarged cross-sectional view of a portion of a clutch for the fly-wheel.

Best Mode to Practice the Invention

In the following, explanations will be given as to an embodiment of the present invention shown in the drawing.

A reference numeral 1 designates a speedometer, which includes an indicator needle 2, speed limiting contacts a through e provided at each display point of the respective speeds of 40, 60, 80, 100 and 120 km/h on a dial plate, contacts a1 through e1 to connect a clutch of a fly-wheel to be described later, contacts a2 through e2 for releasing the fly-wheel running when the speed of the vehicle becomes lowered, and contacts a3 through e3 for releasing the fly-wheel running when the vehicle speed exceeds its limit speed.

In order to maintain the accelerator and clutch systems in operable conditions

- 2 -

when no speed limit is to be imposed by electrical connection between each of the abovementioned contacts and a power source, there are provided switches 4 through 6 for selecting each of the limit speeds 40, 60, and 80 km/h, switches 7 through 9 for connecting the clutch for the fly-wheel in each of the abovementioned limit speed, and switches 10 through 12 for releasing the fly-wheel running when the vehicle speed lowers at each of the abovementioned limit speeds. Each of the switch groups 3, 4, 7, 10, 5, 8, 11, etc. consists of a press-button switch of a type, wherein, when any one of the switch groups is closed, the other switches are brought to their open state, even when they are in closed state.

First timers 13 through 15 are respectively connected to the abovementioned limit speed selection switches 4 through 6. Each of the timers 13 through 15 is provided with a constantly closed type timer contacts 16 through 18, and each contact is opened for a time period set by each of the timers corresponding to it, when the timer is operated.

Second timers 19 through 21 are respectively connected to the switches 7 through 9 for connecting the clutch of the abovementioned fly-wheel. Each of the timers 19 through 21 is provided with a constantly open type timer contact, which is closed for a time period set by each of the timers 19 through 21, when it is operated.

The abovementioned first and second timers, the selection switch groups, and so forth are also provided for the speeds of 100 and 120 km/h, but they are omitted in the drawing for illustration.

An accelerator pedal 25 transmits its operating force to an operating system of a throttle valve through rods 26, 27. Between both rods 26, 27, there is provided an electromagnetic clutch 28 for connecting and disconnecting these rods. An electromagnetic stopper 29 is provided on one part of the abovementioned rod 26 in a relationship of permitting its slide-movement.

A clutch pedal 30 transmits its operating force to an operating system for a

- 3 -

clutch disc through a hydraulic cylinder 31. An electromagnetic plunger 32 is provided on a piston rod 33 of the abovementioned hydraulic cylinder.

A reference numeral 34 designates a constantly open type electromagnetic switch to control the clutch system. Reference numerals 35, 36 designate timers which open their respective constantly closed type contacts 37, 38 for an established time period to thereby control the fly-wheel running system.

The fly-wheel 40 is rotatably supported in a casing 39 and a propeller shaft 41 passes through the interior of the casing so as to be rotatably held to the casing 39. A plurality of ring gears 421 through 425 are formed in a concentric circumferential shape on the opposite surface of the propeller shaft 141 of the fly-wheel 40. Gears 431 through 435 rotatably supported on the propeller shaft 41 are meshed with the respective ring gears 421 through 425. By the abovementioned ring gear train, rotation of the fly-wheel can be maintained substantially constant with respect to variations in the propeller shaft rotation.

Figure 2 shows meshing of the abovementioned both gears, and an embodimental construction of the electro-magnetic clutch. The electromagnetic clutch is of such a construction that it has a rotational plate 44 fixed on the propeller shaft 41, a clutch disc 45 spline-connected within the rotational plate 44, a friction plate 46 fitted on the gear 431 in confrontation to the clutch disc 45, and an electro-magnet 47 provided within the gear 431. Ring-shaped contacts 48, 49 for the electro-magnet are provided on the outer peripheral surface of the abovementioned friction plate 46, and are in contact with fixed contacts 50, 51, respectively.

A reference numeral 52 designates a conduit pipe provided at the casing, which is connected with a vacuum suction pump or an intake manifold (omitted from the illustration). A reference numeral 53 designates a conduit pipe which is connected with various auxiliary appliances such as hydraulic pump, etc..

In the above-described construction, in case no speed limit is imposed, when

- 4 -

the switch 3 is closed, there is formed a circuit routing: the power source (+) - the timer contacts 18, 17, 16 - the electromagnetic clutch 29 - the switch 3 - the power source (-), whereby both solenoids of the electromagnetic clutch 28 are excited and the rods 26 and 27 are in connection. Accordingly, the operating force of the accelerator pedal 25 is transmitted to the operating system of the throttle valve through the rods 26, 27. On the other hand, the electromagnetic switch 34 is electrically conducted in this state, and, since the contact 54 thereof is opened, the electromagnetic plunger 32 does not work, and the operating force of the clutch pedal 30 is transmitted through the hydraulic cylinder 31.

When the limit speed is set at 40 km/h, the switch groups 4, 7, and 10 are closed in the manner as shown in Figure 1. When the engine starts, the fly-wheel 40 begins its rotation by the driving force of the auxiliary machines. And, when the vehicle starts running and the indicator needle 2 of the speedometer 1 contacts the contact $a_1$, there is formed a circuit routing: the power source (+) - the indicator needle 2 - the contact $a_1$ - the switch 7 - the second timer 19 - the contact 55 of the accelerator pedal 25 - the contact 38 of the timer 36 - the power source (-). As the consequence of this, the second timer 19 is brought to its operative state, and the timer contact 22 is closed, whereby there is formed a circuit routing: the power source (+) - the timer contact 22 - the electromagnetic clutch for the fly-wheel (electromagnet 47) - the timer contact 37 - the power source (-), and the electromagnetic clutch for the fly-wheel is connected. Accordingly, the fly-wheel 40 is sufficiently energized by the surplus driving force of the engine and reaches its rated number of revolution.

When the vehicle reaches its limit speed of 40 km/h, the indicator needle 2 contacts with the contact $a$, and there is formed a circuit routing: the power source (+) - the indicator needle 2 - the contact $a$ - the switch 4 - the first timer 13 - the accelerator pedal contact 55 - the timer 38 - the power source (-), whereby the first timer 13 is in its operative state, and its contact 16 is opened. Accordingly, electric conduction to the electromagnetic clutch 28 of the accelerator system is interrupted, and the electric conduction to the electromagnetic switch 34 is also interrupted, hence the contact 54 is closed. As the result, there is formed a circuit routing: the power source (+) - the contact 54 - the electromagnetic plunger 32 of the clutch system and the electromagnetic stopper 29 of the accelerator system - the switch 4 - the power source (-), whereby treading of the accelerator pedal 25 becomes impossible, the piston rod 33 of the clutch pedal 30 is pulled rightward to perform the same operation as the clutch pedal 30 is trod, and the clutch is released.

Accordingly, the vehicle becomes incapable of accelerating its speed, and it runs in a state of its clutch being released, i.e., in an idling state, by virtue of the driving force from the fly-wheel 40 for a time period as established by the first and second timers 13, 19.

In this fly-wheel running of the vehicle, when the vehicle reduces its running speed and the indicator needle 2 of the speedometer 1 contacts with the contact a2, there is formed a circuit routing: the power source (+) - the indicator needle 2 - the contact a2 - the switch 10 - the timer 36 - the power source (-). As the result of this, the timer contact 38 opens, then a self-sustaining circuit for the first and second timers 13, 19 opens to render both timers 13, 19 to be inoperable, and the timer contact 16 is closed, while the timer contact 22 opens, so that the accelerator system and the clutch system reinstate their normal engine running state, and the vehicle is again brought to its speed accelerated condition, thereby repeating the abovementioned state.

In the fly-wheel running, when the vehicle runs down-slope and exceeds its limit speed, the indicator needle 2 of the speedometer 1 contacts the contact a3, whereby there is formed a circuit routing: the power source (+) - the indicator

- 6 -

needle 2 - the contact a3 - the timer 35 - the power source (-). As the consequence, the timer contact 37 is opened to release the electromagnetic clutch of the fly-wheel 40, so that the vehicle performs coasting.

The same operation as mentioned in the foregoing is done even in case of the limit speed being 60, 80 km/h, etc.. It is to be noted that the speedometer can be constructed in a manner to also serve as the speed detecting circuit by a non-contact or proximity switch.

C L A I M S

1. In an internal-combustion-engine-driven-vehicle provided with a first timer which operates when the vehicle has reached its limit speed, and an electro-magnetic mechanism installed in the transmission system of an accelerator pedal and a clutch pedal to close a throttle valve irrespective of operation of the accelerator pedal and to release the clutch irrespective of operation of the clutch pedal, for a time period established by the first timer mechanism, and to reinstate these throttle vale and clutch upon lapse of said established time, a power transmission device for a hybrid type fly-wheel vehicle, wherein there are provided a fly-wheel which receives driving force of a propeller shaft through the clutch and gears; and a second timer mechanism which becomes operative before the vehicle reaches its limit speed, connects said clutch for the fly-wheel to transmit the driving force of the propeller shaft to the fly-wheel, and, after the vehicle has reached its limit speed and the vehicle performs its fly-wheel running for a predetermined time, releases said clutch for the fly-wheel.

2. The power transmission device for a hybrid type fly-wheel vehicle as set forth in Claim 1, wherein said first and second timer mechanisms are provided in a plurality of numbers in correspondence to the limit speeds of the vehicle speed.

3. The power transmission device for a hybrid type fly-wheel vehicle as set forth in Claim 1 or 2, wherein the operations of said first and second timer mechanisms are controlled by an indicator needle of a speedometer and electrical
contacts disposed on a rotational locus thereof.

4. In an internal-combustion-engine-driven-vehicle provided with a first timer which operates when the vehicle has reached its limit speed, and an electro-magnetic mechanism installed in the transmission system of an accelerator pedal and a clutch pedal to close a throttle valve irrespective of operation of the accelerator pedal and to release the clutch irrespective of operation of the clutch pedal, for a time period established by the first timer mechanism, and to reinstate these throttle valve and clutch upon lapse of said established time, a power transmission device for a hybrid type fly-wheel vehicle, wherein there are provided a fly-wheel which receives driving force of a propeller shaft through the clutch and gears; a second timer mechanism which becomes operative before the vehicle reaches its limit speed, connects said clutch for the fly-wheel to transmit the driving force of the propeller shaft to the fly-wheel, and, after the vehicle has reached its limit speed and the vehicle performs its fly-wheel running for a predetermined time, releases said clutch for the fly-wheel; and a mechanism to release the operations of said first and second timer mechanism when the vehicle reduces its speed during said fly-wheel running thereof.

5. The power transmission device for a hybrid type fly-wheel vehicle as set forth in Claim 4, wherein said first and second timer mechanisms are provided in a plurality of numbers in correspondence to the limit speeds of the vehicle speed.

6. The power transmission device for a hybrid type fly-wheel vehicle as set forth in Claim 4 or 5, wherein the operations of said first and second timer mechanisms are controlled by an indicator needle of a speedometer, and electrical contacts disposed on the rotational locus thereof.

7. In an internal-combustion-engine-driven-vehicle provided with a first timer which operates when the vehicle has reached its limit speed, and an electro-

- 9 -

magnetic mechanisms installed in the transmission system of an accelerator pedal and a clutch pedal to close a throttle valve irrespective of operation of the accelerator pedal and to release the clutch irrespective of operation of the clutch pedal, for a time period established by the first timer mechanism, and to reinstate these throttle valve and clutch upon lapse of said established time, a power transmission device for a hybrid fly-wheel vehicle, wherein there are provided a fly-wheel which receives driving force of a propeller shaft through the clutch and gears; a second timer mechanism which becomes operative before the vehicle reaches its limit speed, connects said clutch for the fly-wheel to transmit the driving force of the propeller shaft to the fly-wheel, and, after the vehicle has reached its limit speed and the vehicle performs its fly-wheel running for a predetermined time, releases said clutch for the fly-wheel; a mechanism to release the operations of said first and second timer mechanisms when the vehicle reduces its speed during said fly-wheel running thereof; and a mechanism to release the operation of said second timer mechanism when the vehicle increases its speed during said fly-wheel running thereof.

8. The power transmission device for a hybrid type fly-wheel vehicle as set forth in Claim 7, wherein said first and second timer mechanisms are provided in a plurality of numbers in correspondence to the limit speeds of the vehicle speed.

9. The power transmission device for a hybrid type fly-wheel vehicle as set forth in Claim 7 or 8, wherein operations of said first and second timer mechanisms are controlled by an indicator needle of a speedometer and electrical contacts disposed on the rotational locus thereof.

_10 _

0027823

FIG.1

FIG.2

# INTERNATIONAL SEARCH REPORT

International Application No PCT/JP79/00096

**I. CLASSIFICATION OF SUBJECT MATTER (if several classification symbols apply, indicate all)**

According to International Patent Classification (IPC) or to both National Classification and IPC

B 60 K 25/00

0027823

**II. FIELDS SEARCHED**

Minimum Documentation Searched

| Classification System | Classification Symbols |
|---|---|
| IPC | B 60 K 25/00, B 62 M 1/10 |

Documentation Searched other than Minimum Documentation
to the Extent that such Documents are Included in the Fields Searched

Jitsuyo Shinan Koho 1910-1978
Kokai Jitsuyo Shinan Koho 1971-1978

**III. DOCUMENTS CONSIDERED TO BE RELEVANT**

| Category | Citation of Document, with indication, where appropriate, of the relevant passages | Relevant to Claim No. |
|---|---|---|
| A | JP, B2, 52-23449   24.06.77<br>Argudas Leonės Nasvishys | 1-5 |
| A | US, A, 3,493,066   03.02.70<br>James L, Dooley | 1-5 |
| A | US, A, 3,771,311   13.11.73<br>Esso Research and Eng, Co, | 1-5 |
| A | US, A, 3,882,950   13.05.75<br>James Neil Strohlein | 1-5 |
| A | DE, B, 2,444,564   01.04.76<br>Korner H | 1-5 |

\* Special categories of cited documents:

"A" document defining the general state of the art

"E" earlier document but published on or after the international filing date

"L" document cited for special reason other than those referred to in the other categories

"O" document referring to an oral disclosure, use, exhibition or other means

"P" document published prior to the international filing date but on or after the priority date claimed

"T" later document published on or after the international filing date or priority date and not in conflict with the application, but cited to understand the principle or theory underlying the invention

"X" document of particular relevance

**IV. CERTIFICATION**

| Date of the Actual Completion of the International Search | Date of Mailing of this International Search Report |
|---|---|
| June 27, 1979 (27.06.79) | July 9, 1979 (09.07.79) |

| International Searching Authority | Signature of Authorized Officer |
|---|---|
| Japanese Patent Office | |

Form PCT/ISA/210 (second sheet) (October 1977)